# EUROPÄISCHE PATENTSCHRIFT

(11) **EP 0 953 760 B1**
(45) Veröffentlichungstag und Bekanntmachung des Hinweises auf die Patenterteilung: **01.08.2001**
(21) Anmeldenummer: 99108120.9
(22) Anmeldetag: 24.04.1999
(51) Int. Cl.: F02M 25/022, B01F 15/02

(54) **Dosiervorrichtung für eine Emulgieranlage**
Dosing device for a emulsifying plant
Dispositif de dosage pour une installation de production d'une émulsion

(30) Priorität: 30.04.1998 DE 19819271
(43) Veröffentlichungstag der Anmeldung: 03.11.1999
(73) Patentinhaber: Kramb, Günther, 55469 Simmern (DE); Kramb, Jan, 56329 St. Goar-Biebernheim (DE)
(72) Erfinder: Kramb, Günther, 55469 Simmern (DE); Kramb, Jan, 56329 St. Goar-Biebernheim (DE)
(74) Vertreter: Dr. Weitzel & Partner

(56) Entgegenhaltungen:
- EP-A- 0 263 443
- EP-A- 0 545 334
- EP-A- 0 674 941
- EP-A- 0 721 063
- US-A- 4 063 536
- US-A- 4 461 245

## Beschreibung

Die Erfindung betrifft eine Emulgieranlage, beispielsweise von jener Art, wie in EP 0 263 443 A, EP 0 721 063 A, EP 0 674 941 A oder EP 0 545 334 B1 beschrieben.

Solche Emulgieranlagen dienen dazu, aus Dieselöl und Leitungswasser Emulsionen herzustellen, die der Einspritzeinrichtung eines Motors zugeführt werden, sei es für eine stationäre Anlage oder für ein Kraftfahrzeug.

Der wesentliche Zweck der Verwendung von Dieselkraftstoff-Wasser-Emulsionen liegt in der Verringerung von Stickoxiden und von Ruß als Bestandteil der Abgasemission. Außerdem besteht aufgrund der Rußverringerung die Möglichkeit des Einbaus eines Katalysators. Die mit solchen Anlagen erzielten Emissionsverbesserungen sind geradezu spektakulär. So läßt sich beispielsweise der Rußgehalt in den Abgasen von Dieselmotoren durch Einsatz einer Emulgieranlage auf Werte in der Größenordnung von einem Siebtel herunterdrücken. Dabei hängt der Erfolg der Emissionsverbesserung von zahlreichen Parametern ab. Ein ganz entscheidender Parameter ist das Mischungsverhältnis zwischen Dieselkraftstoff und Wasser der Emulsion, die dem Motor zugeführt wird.

Entsprechend der Änderung der Motorleistung muß einerseits die Menge der Emulsion veränderbar sein. Andererseits ist es aber auch wünschenswert, das Mischungsverhältnis der Emulsion, d.h. der Anteile von Dieselkraftstoff zu Wasser, entsprechend den Betriebsbedingungen in feinfühliger Weise zu regeln.

Ein schwerwiegendes Problem bekannter Emulgieranlagen besteht darin, daß es aufgrund eines Ausfalles von Elementen, die der eigentlichen Emulgiereinrichtung vorgeschaltet sind, zu einer Überwässerung kommt und damit zur Bildung einer extrem mageren Emulsion, die im Extremfall praktisch nur noch aus Wasser besteht. Hierdurch können im nachgeschalteten Teil der gesamten Emulgieranlage, eingeschlossen den Motor, schwere Schäden entstehen.

Es ist zwar denkbar, das Auftreten einer solchen Überwässerung durch Sicherheitsmaßnahmen zu vermeiden, beispielsweise dadurch, daß die beiden Teilströme aus Dieselkraftstoff und Wasser vor ihrem Eintritt in die Emulgiereinrichtung überwacht werden, beispielsweise mittels Durchsatzmessern und Magnetventilen. Der Nachteil besteht jedoch darin, daß in den Mischungsvorgang immer erst dann eingegriffen wird, wenn bereits eine ungünstige Entwicklung eingetreten ist und demgemäß eine Überwässerung schon stattgefunden hat. Außerdem ist der apparative Aufwand hierbei verhältnismäßig groß.

Der Erfindung liegt die Aufgabe zugrunde, eine Emulgieranlage derart zu gestalten, daß eine ungewollte Änderung des Mischungsverhältnisses, insbesondere eine Überwässerung, positiv vermieden wird.

Diese Aufgabe wird durch die Merkmale von Anspruch 1 gelöst.

im allgemeinen wird man den Kraftstofffluß als dominierende Komponente heranziehen, nicht den Wasserfluß. Dies könnte jedoch auch umgekehrt sein, so daß man die Energie des Wasser-Volumenstromes heranzieht, um einen Kraftstoff-Volumenstrom zu fördern.

Zur Verwirklichung der Erfindung gibt es zahlreiche Möglichkeiten.

So könnte beispielsweise in der Kraftstoffleitung ein Turbinenrad angeordnet sein, und in der Wasserleitung ein Pumpenrad. Turbinenrad und Pumpenrad stehen in Triebverbindung miteinander. Wird Kraftstoff unter Druck in die Kraftstoffleitung eingespeist, so treibt der Kraftstoff-Volumenstrom entsprechend seinem Druck und seinem Durchsatz das Turbinenrad an.
Dieses treibt wiederum das Pumpenrad an, Demgemäß wird Wasser allein nach Maßgabe des Kraftstoffstromes gefördert. Man könnte hierbei von einem hydrodynamischen System sprechen.

Als weitere Möglichkeit käme in Betracht, in die Kraftstoffleitung einen Kolben zu schalten, der - von Magnetventilen gesteuert - eine oszillierende Bewegung ausführt und dabei gleichzeitig Wasser in einer Wasserleitung fördert. Auch hierbei findet die Wasserförderung wiederum nach Maßgabe des Kraftstoff-Volumenstromes statt. Als Kolben im weiteren Sinne käme auch eine Membran in Betracht, die pulsierende Bewegungen ausführt. Insgesamt könnte man dieses Prinzip als "Verdrängerprinzip" bezeichnen.

Weiterhin käme das Prinzip der Ejektorpumpe in Betracht. Hierbei wird beispielsweise Kraftstoff durch eine Ejektordüse hindurchgeleitet. Nach Maßgabe des Kraftstoff-Volumenstromes wird Wasser angesaugt und gefördert - wiederum nach Maßgabe des Kraftstoff-Volumenstromes. Hierbei könnte man von einem Ejektorprinzip sprechen.

Die Erfindung ist anhand der Zeichnung näher erläutert.

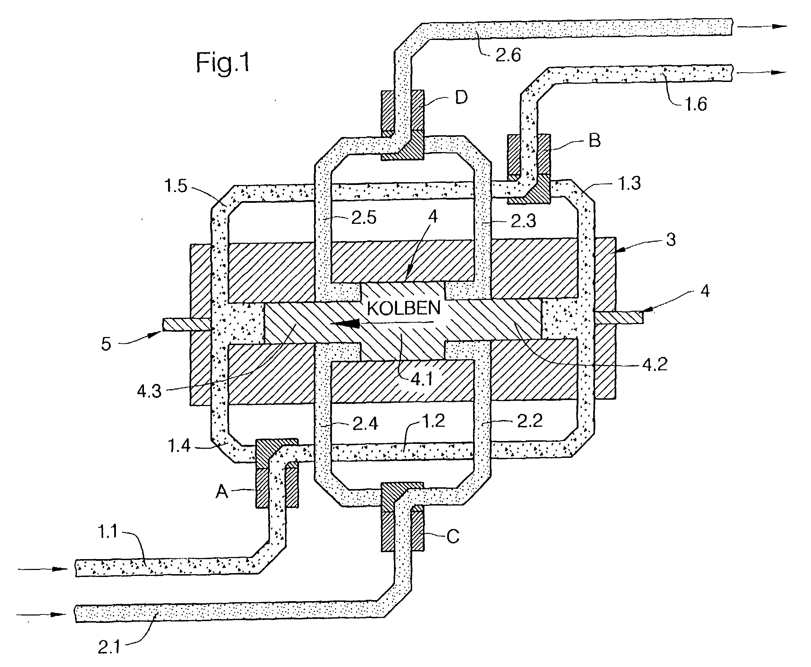

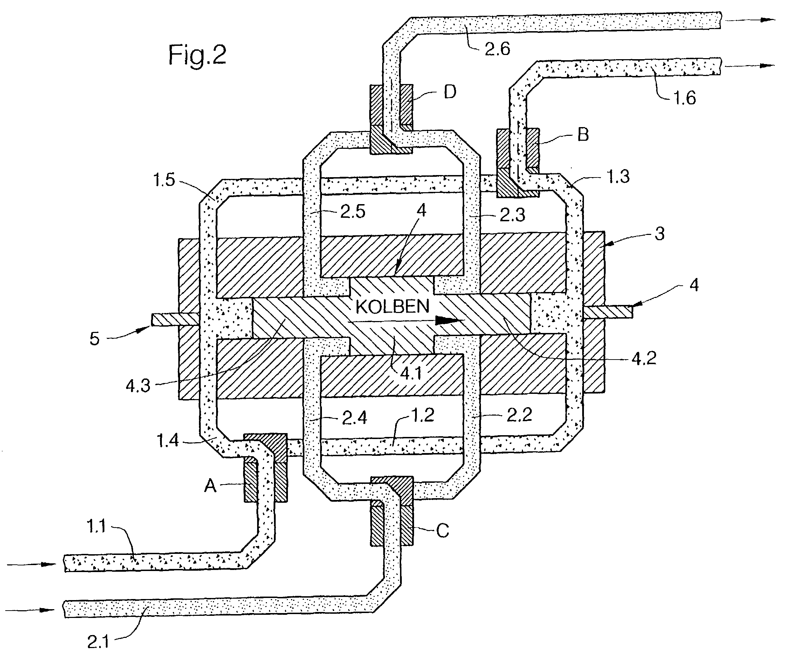

Die Figuren 1 und 2 zeigen eine Verwirklichung des Verdrängerprinzipes. Man erkennt aus den Figuren jeweils zwei Leitungsstränge, nämlich einen Wasserstrang 1.1 bis 1.6 und einen Kraftstoffstrang 2.1 bis 2.6.

Im Wasserstrang befindet sich ein erstes Magnetventil A und ein zweites Magnetventil B, und im Kraftstoffstrang befindet sich ein erstes Magnetventil C und ein zweites Magnetventil D.

Man erkennt ferner ein Gehäuse 3 mit einem Kolben 4. Der Kolben 4 weist einen Teilkolben 4.1 größeren Durchmessers sowie zwei Teilkolben 4.2, 4.3 kleineren Durchmessers auf. Der Kolben 4 ist in einem Zylinderraum in Richtung der Pfeile in den beiden Figuren verschiebbar. Die Dosiervorrichtung arbeitet wie folgt:
In Figur 1 ist das Zwei-Wege-Magnetventil C derart geschaltet, daß die Kraftstoff-Leitungsabschnitte 2.1 und 2.2 in leitender Verbindung miteinander stehen. Da in den Leitungsabschnitt 2.1 unter Druck stehender Kraftstoff eingeleitet wird, wirkt dieser Druck auf den Teilkolben 4.1. Dieser bewegt sich deshalb entsprechend dem in Figur 1 gezeigten Pfeil nach links.

Zwei-Wege-Magnetventil B ist derart geschaltet, daß die Leitungsabschnitte 1.5 und 1.6 der Wasserleitung miteinander in leitender Verbindung stehen.
Zwei-Wege-Magnetventil D ist derart geschaltet, daß die Leitungsabschnitte 2.5, 2.6 der Kraftstoffleitung miteinander in leitender Verbindung stehen. Aufgrund der Bewegung des Kolbens 4 werden nunmehr Teilströme von Kraftstoff und Wasser in die Leitungsabschnitte 2.6 bzw. 1.6 gedrückt. Diese Leitungsabschnitte werden zusammengeführt (hier nicht dargestellt). Der Gesamtstrom wird einem hier nicht dargestellten Emulgiergerät zugeführt.

Unter der Voraussetzung, daß die im Wasserstrang sowie die im Kraftstoffstrang befindlichen Ventile gleichzeitig arbeiten, bleibt das Wasser-Kraftstoff-Verhältnis konstant. Es ist bestimmt durch die Volumina der beteiligten Kolben-Zylinder-Einheiten. Man kann aber auch durch die Veränderung der Öffnungszeiten der im Wasserstrang befindlichen Ventile das Verhältnis ändern. Dies kann kontinuierlich geschehen (z. B. elektronisch gesteuert durch Abfrage eines Leistungssignals), so daß ein beliebiges Mischungsverhältnis von 0 bis maximal dem durch das Volumen bestimmte Verhältnis hergestellt werden kann.

Figur 2 zeigt jene Arbeitsphase der Dosiervorrichtung, bei welcher der Kolben 4 aus seiner linken Position in seine rechte Position wandert.

Der Kolben führt somit ständig eine hin- und hergehende Bewegung aus, und zwar bewirkt durch den unter Druck in den Leitungsabschnitt 2.1 einströmenden Kraftstoff, und gesteuert durch die Magnetventile, in erster Linie durch das Magnetventil C.

Damit wird folgendes sichergestellt:
Es kann nur dann Wasser fließen, wenn auch Kraftstoff fließt. Ferner wird das Mischungsverhältnis zwischen Kraftstoff und Wasser stets konstant gehalten. Eine Überwässerung des resultierenden Gemisches kann somit zu keinem Zeitpunkt eintreten.

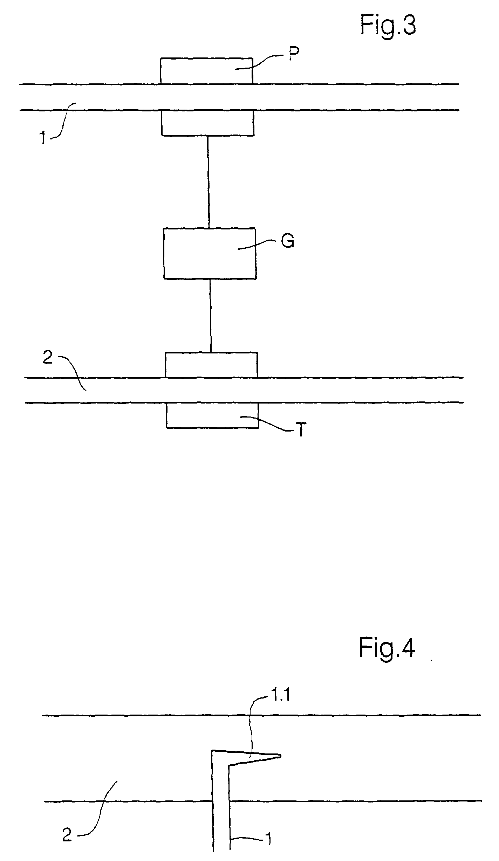

In Figur 3 ist eine Ausführungsform dargestellt, bei welcher das hydrodynamische Prinzip angewandt wird. Man erkennt eine Wasserleitung 1 und eine Kraftstoffleitung 2. In die Wasserleitung 1 ist eine Pumpe P geschaltet, und in die Kraftstoffleitung 2 eine Turbine T. Turbine T und Pumpe P stehen in Triebverbindung miteinander. In die Triebverbindung ist ein Getriebe G geschaltet, dessen Übersetzung regelbar ist.

Diese Dosiervorrichtung arbeitet wie folgt: In die Kraftstoffleitung 2 wird unter Druck stehender Kraftstoff eingeleitet, so daß die Turbine angetrieben wird. Die Turbine treibt über Getriebe G die Pumpe P an. Diese saugt demgemäß aus einem nicht dargestellten Vorratsbehälter über die Leitung 1 Wasser an.

Figur 4 veranschaulicht sehr schematisch die Anwendung des Ejektorprinzips. Dabei ist in die Kraftstoffleitung 2 eine Düse 1.1 eingeführt, die Bestandteil einer Wasserleitung 1 ist.

Das erfindungsgemäße Verfahren funktioniert bereits dann, wenn der Druck des ersten Teilstromes in der ersten Leitung verhältnismäßig gering ist. Drücke von 0,5 bar reichen aus. Auch 0,3 bar ist praktikabel. In der Praxis wird man Drücke von zwischen 0,5 und 1,0 bar anwenden.

## Patentansprüche

1. Emulgieranlage mit einer Dosiervorrichtung, mit den folgenden Merkmalen:
a) die Dosiervorrichtung dosiert zwei Teilströme unterschiedlicher Zusammensetzung und bildet somit einen Mischstrom, der eine Emulgiervorrichtung speist;
b) es ist eine erste Leitung (2) vorgesehen, die einen ersten, unter Druck stehenden Teilstrom aufnimmt;
c) es ist eine zweite Leitung (1) vorgesehen, die an ein Reservoir angeschlossen ist, das seinerseits den zweiten Teilstrom bildet; gekennzeichnet durch die folgenden Merkmale:
d) es ist ein Förderelement vorgesehen, das den zweiten Teilstrom fördert, und das seine Energie aus der Strömungsenergie des ersten Teilstromes bezieht.

2. Emulgieranlage mit einer Dosiervorrichtung nach Anspruch 1, gekennzeichnet durch die folgenden Merkmale:
a) in der zweiten Leitung (1) ist ein Pumpenrad (P) vorgesehen;
b) in der ersten Leitung (2) ist ein Turbinenrad (T) vorgesehen;
c) Turbinenrad (T) und Pumpenrad (P) stehen in Triebverbindung miteinander.

3. Emulgieranlage mit einer Dosiervorrichtung nach Anspruch 2, dadurch gekennzeichnet, daß in der Triebverbindung ein variables Getriebe angeordnet ist.

4. Emulgieranlage mit einer Dosiervorrichtung nach Anspruch 1, gekennzeichnet durch die folgenden Merkmale:
a) der ersten Leitung ist ein doppelseitig beaufschlagter, erster Kolben zugeordnet;
b) es sind Magnetventile vorgesehen, die eine abwechselnde Beaufschlagung des Kolbens mit dem ersten Teilstrom bewirken, und damit eine oszillierende Bewegung des Kolbens;
c) der zweiten Leitung ist ein zweiter Kolben zugeordnet, der mit dem ersten Kolben zusammengeschaltet ist und aufgrund von dessen oszillierender Bewegung eine taktweise Verdrängung und Förderung des zweiten Teilstromes bewirkt.

## Claims

1. An emulsifying plant with a dosing apparatus, comprising the following features:
a) the dosing apparatus doses two partial flows of different composition and thus forms a mixed flow which supplies an emulsifying apparatus;
b) a first conduit (2) is provided which receives a first pressurized partial flow;
c) a second conduit (1) is provided which is connected to a reservoir which on its part forms the second partial flow;
characterized by the following features:
d) a conveying element is provided which conveys the second partial stream and obtains its energy from the flow energy of the first partial stream.

2. An emulsifying plant with a dosing apparatus as claimed in claim 1,
characterized by the following features:
a) a pump impeller (P) is provided in the second conduit (1);
b) a turbine wheel (T) is provided in the first conduit (2);
c) the turbine wheel (T) and the pump impeller (P) are in a drive connection with one another.

3. An emulsifying plant with a dosing apparatus as claimed in claim 2,
characterized in that a variable gear is disposed in the drive connection.

4. An emulsifying plant with a dosing apparatus as claimed in claim 1,
characterized by the following features:
a) a first piston, pressurized on either side, is associated with the first conduit;
b) solenoid valves are provided which cause an alternating pressurization of the piston with the first partial flow and thus produce an oscillating movement of the piston;
c) a second piston is associated with the second conduit, which second piston is interconnected with the first piston and thus causes a cyclid displacement and conveyance of the second partial flow as a result of its oscillating movement.

## Revendications

1. Installation d'émulsification avec un dispositif de dosage, présentant les éléments suivants :
a) le dispositif de dosage dose deux flux partiels de composition différente et forme ainsi un flux mélangé qui alimente un dispositif d'émulsification ;
b) il est prévu une première conduite (2) qui reçoit un premier flux partiel sous pression ;
c) il est prévu une deuxième conduite (1) raccordée à un réservoir qui crée le deuxième flux partiel ;
caractérisée en ce qu'il est prévu un élément de transport qui transporte un deuxième flux partiel et en ce que l'énergie produite par sa circulation chauffe le premier flux partiel.

2. Installation d'émulsification avec un dispositif de dosage selon la revendication 1, caractérisée en ce que :
a) une roue de pompe (P) est prévue sur la deuxième conduite (1) ;
b) une roue de turbine (T) est prévue sur la première conduite (2) ;
c) il existe une liaison d'entraînement entre la roue de turbine (T) et la roue de pompe (P).

3. Installation d'émulsification avec un dispositif de dosage selon la revendication 2, caractérisée en ce qu'un engrenage variable est disposé dans la liaison d'entraînement.

4. Installation d'émulsification avec un dispositif de dosage selon la revendication 1, caractérisée en ce que :
a) la première conduite est associée à un premier piston à double action ;
b) il est prévu des électrovannes qui exposent alternativement le piston à un premier flux partiel et réalisent ainsi un mouvement d'oscillation du piston ;
c) la deuxième conduite est associée à un deuxième piston qui est relié au premier piston et réalise, sous l'effet du mouvement d'oscillation de celui-ci, un refoulement et un transport cadencés du deuxième flux partiel.
